# EUROPEAN PATENT SPECIFICATION

(11) **EP 1 489 295 B1**
(45) Date of publication and mention of the grant of the patent: **27.10.2010**
(21) Application number: 04014259.8
(22) Date of filing: 17.06.2004
(51) Int. Cl.: F02N 11/08, F02N 11/04, B60W 10/06, B60W 10/08, F02D 41/04, B60K 6/485

(54) **Vehicle control device**
Kraftfahrzeugsteuerungsvorrichtung
Dispositif de commande pour véhicule

(30) Priority: 20.06.2003 JP 2003176783
(43) Date of publication of application: 22.12.2004
(73) Proprietor: Toyota Jidosha Kabushiki Kaisha, Toyota-shi, Aichi-ken, 471-8571 (JP)
(72) Inventor: Kusumi, Hidetoshi, Toyota-shi Aichi-ken, 471-8571 (JP)
(74) Representative: TBK-Patent

(56) References cited:
- EP-A- 1 136 696
- EP-A- 1 207 289
- US-A- 4 797 602
- PATENT ABSTRACTS OF JAPAN vol. 1998, no. 02, 30 January 1998 (1998-01-30) & JP 09 264235 A (TOYOTA MOTOR CORP), 7 October 1997 (1997-10-07)

## Description

### BACKGROUND OF THE INVENTION

### Field of the Invention

The present invention relates to a vehicle control device including an engine and a motor generator with a battery as the power source. Particularly, the present invention relates to a control device of an idling stop vehicle that functions to stop the engine of the vehicle at idle whenever possible, specifically, a control device of a hybrid vehicle that can stop the engine using power generated with the motor generator operated as a generator, and that can run the vehicle with the motor generator operated as a motor.

### Description of the Background Art

From the standpoint of preventing global warming and saving resources, an idling stop system (also called economy running system or engine automatic stop-and-start system; also referred to as "eco-run" hereinafter) that automatically stops the engine when the vehicle halts at a red light at a street crossing or the like, and then restarts the engine when the driver operates to initiate running (for example, depressing the accelerator pedal, releasing the brake pedal, switching the shift lever to a forward drive position, or the like) has been adapted to practical use. In such a system, a rechargeable accumulator (for example, a secondary battery such as a lead storage battery or lithium battery) is mounted to supply power to the auxiliary equipment (air conditioner, head lamp, audio, and the like) during times when the vehicle is at halt. When the engine of a vehicle incorporating such a system is to be restarted, the crank shaft is rotated through a motor (motor generator, starter motor, or the like) using the power of the accumulator to start the engine again. In this context, it is necessary to start the engine as quickly as possible from the standpoint of improving the vehicle drivability and protecting the environment.

There is also known a hybrid system incorporating an engine and a motor as the driving source of a vehicle. The vehicle runs with the engine, not the motor, operated when the vehicle running status corresponds to an area of favorable engine efficiency, and runs with the motor, not the engine, operated when the vehicle running status corresponds to an area of poor engine efficiency. Such a vehicle differs from a conventional vehicle in that the engine is stopped automatically even if the driver does not turn the ignition key to the engine-off position, and the engine is started again automatically when the running status of the vehicle changes. A vehicle incorporating such a system has the crank shaft rotated through the motor to start the engine again. There is also the case where the engine is restarted in order to drive auxiliary equipment or to charge the accumulator when the vehicle is at a halt. It is necessary to start the engine as quickly as possible in such an event from the standpoint of improving vehicle drivability and protecting the environment.

When the engine is to be restarted in such a system, the crank shaft is rotated through the motor, and the engine attains a status of complete explosion (status where the engine exceeds a predetermined number of revolutions) through fuel injection from the fuel injection valve or firing from the ignition plug. It is necessary to determine the cylinder based on the rotation phase of the crank shaft and cam shaft to define the cylinder corresponding to fuel injection or firing.

During engine stop processing, control is provided to stop the engine at a certain crank angle. Specifically, when the number of revolutions of the engine becomes lower than a prescribed number of revolutions, the motor generator effects the brake action when arriving at the prescribed crank angle to stop the engine at a certain crank angle. In the case where the engine could not stop at the certain angle, the motor is driven instantaneously such that the engine stops at the certain crank angle. Techniques in relation to such control are disclosed in publications set forth below.

Japanese Patent Laying-Open No. 9-264235 discloses a power train control device directed to solve the problem that unburned gas exhaust caused by fuel leakage can not be suppressed sufficiently. This problem is considered to be caused by the delay in initiating injection control and ignition control at the time of starting the engine since the absolute crank angle is indefinite when the engine stops. The power train control device disclosed in this publication includes a power generator coupled to the crank shaft of the internal combustion engine to drive or apply the brake to the internal combustion engine. The control device includes a control circuit that controls the operation of the motor generator, and a sensor sensing the absolute crank angle of the crank shaft. The control circuit includes a stop control circuit stopping the crank shaft within a range of a certain absolute crank angle defined such that the absolute crank angle can be sensed at an early stage after the internal combustion engine is started by operating the motor generator based on an absolute crank angle sensed by the sensor when the internal combustion engine is at a halt.

The aforementioned certain absolute crank angle is an angle defined such that an absolute crank angle can be detected immediately by the sensor at the time of starting the internal combustion engine. It is therefore possible to stop the crank shaft always at a position that allows immediate discrimination of a cylinder right after the internal combustion engine is started. When the internal combustion engine is started next time (including the case of restarting the engine), proper injection control and ignition control can be initiated immediately. As a result, the amount of fuel being exhausted as unburned gas due to injector leakage can be reduced, whereby aggravation of exhaust emission and startability can be suppressed.

Japanese Patent Laying-Open No. 2002-89421 discloses a starter energization circuit to prevent inrush current generated at the starter motor when an engine is started at low cost. The starter energization circuit includes a vehicle starter motor with an armature incorporating a plurality of armature coils and a plurality of sets of brushes to energize the armature coils, and a switching circuit to apply intermittently current to some of the brushes among the energization circuits of the plurality of sets of brushes. The starter energization circuit includes a circuit that cuts the current applied to some of the brushes through the switching circuit at the start of energizing the starter motor, and subsequently applies current to some of the brushes.

In accordance with the starter energization circuit disclosed in the aforementioned publication, the inrush current generated at the time of initiating energization of the starter motor can be suppressed by a relatively economical method of suppressing the application of current to some brushes by means of a switching circuit. Suppression of inrush current generation will prevent voltage from dropping suddenly, reducing the possibility of erroneous operation of electric and electronic devices incorporated in the vehicle. Suppression of inrush current generation will also allow the capacitance of the magnet switch that conducts intermittent application of current to the starter motor to be set lower than in the conventional case. As a result, the size, weight and cost of the magnet switch can be reduced.

However, the apparatuses disclosed in the above-described publications have problems set forth below.

In the power train control device disclosed in Japanese Patent Laying-Open No. 9-264235, PWM (Pulse Width Modulation) control is conducted using an inverter circuit connected to the motor generator in order to stop the engine in a range of a predetermined absolute crank angle through the operation of a start control circuit. This means that a current sensor, a PWM switching circuit, and the like are required to feed back the current. Therefore, an idling stop system that can be realized at low cost, as in the present invention, cannot be provided.

The starter energization circuit disclosed in Japanese Patent Laying-Open No 2002-89421 requires a switching circuit to cut off current to some of the armature coils (the armature coil at the side that is not applied current at the start of starter energization) in order to avoid generation of inrush current at the time of starting the engine. Thus, an idling stop system that can be realized at low cost cannot be provided, likewise the above case.

An idling stop system that can be realized at low cost will be described hereinafter.

When an economical idling stop system is to be realized, the design rules set forth below are employed. Specifically: the power source of the motor to restart the engine is based on one battery alone (for example, an inexpensive 14V-type lead battery that is widely used); a motor generator connected to the crank shaft of the engine via a belt is used to restart the engine, absent of noise caused by gears brought into engagement as in the case of a starter motor and having a starting response favorable than that of a starter motor; and the motor generator and the PCU (Power Control Unit) including an inverter circuit that is a driving circuit of the motor generator are to be rendered as economical as possible.

A possible approach to obtain a motor generator and PCU of low cost is to modify a low-cost alternator generally incorporated and widely used in a vehicle (the armature and the rotor of the alternator are directly used while replacing the rectifier circuit with an inverter circuit), or to use an air-cooled PCU instead of a water-cooled PCU.

When such a system is to be implemented, it is preferable to use a motor generator, if possible, for restarting the engine in the idling stop system since there is no abnormal noise and the high response is high. Meanwhile, the armature and rotor components of the general alternator are used to be driven as a motor to crank the engine up. Since a great amount of torque is required for this cranking, the engine will be restarted under severe conditions for the low-voltage battery, general-purpose alternator, and air-cooled PCU. Therefore, the engine must be stopped at a crank angle corresponding to an engine starting torque as low as possible when the engine is to be restarted.

If the inrush current is controlled in such state of affairs by means of PWM control as in the aforementioned Japanese Patent Laying-Open No. 9-264235 or by means of a switching circuit as in Japanese Patent Laying-Open No 2002-89421, the cost of the inverter circuit that is the driver circuit of the motor generator will be raised.

It is therefore desirable to stop the engine at a crank angle corresponding to the lowest starting torque in the engine stop control process prior to engine restart. It is also desirable to eliminate any factor that may increase the cost of the current feedback control system and the like. In addition, in the event that the engine is stopped at a crank angle corresponding to the lowest starting torque, it is desirable to suppress generation of inrush current that will result in an extremely large current when the engine is restarted through a motor generator. Furthermore, it is desirable to eliminate any factor that may increase the cost of the switching circuit and the like therefor.

It is to be noted that such demands are not limited to an idling stop system, and are common to a system that executes control of restarting the engine after it is temporarily stopped in a vehicle incorporating both an engine and a motor generator.

Furthermore, the document EP-A-1 136 696 discloses a process and a device for positioning the moving parts of an combustion engine in order to facilitate a restart of the combustion engine after a temporarily shutdown. Therefore, a control unit is provided for carrying out a feedback control in order to obtain a predetermined crank angle when temporarily shutting down the combustion engine.

Still further, document EP-A-1 207 289 discloses a rotation control apparatus for controlling an internal combustion engine rotating means for driving an internal combustion engine to control rotation of a rotating shaft of the internal combustion engine. The rotation control apparatus includes an ECU for reducing vibrations of the engine. The ECU maintains a rotational speed of the internal combustion engine at a reference rotational speed to reduce an air pressure in a cylinder of the internal combustion engine when an operation of the internal combustion engine is stopped, and subsequently stops rotation of the engine.

### SUMMARY OF THE INVENTION

An object of the present invention is to provide an economic vehicle control device to realize an engine restart system.

This object is achieved by a vehicle control device according to claim 1. Further features and advantageous modifications are shown i the dependent claims.

By using a terminal conventionally provided at a drive circuit connected to the motor generator for receiving first and second signals (for example, a terminal receiving the first signal at a High signal level and the second signal at a Low signal level) in accordance with the present invention, the motor generator can be operated as a motor to positively rotate the engine during the period starting from initiating temporary engine stop control up to engine stop, and the motor generator can be operated as a power generator to apply the brake on the engine to stop rotation thereof to stop the engine at a predetermined crank angle. Accordingly, it is no longer necessary to incorporate a current feedback circuit, a PWM control circuit, or a switching circuit. As a result, a vehicle control device to realize an engine restart system can be provided at low cost.

Furthermore, the fuel is cut when the engine enters the stop control mode, whereby the number of revolutions of the engine becomes lower. First, the first stop control circuit selectively switches between the first and second signals based on the sensed number of revolutions of the engine, and provides the selected signal to the drive circuit to set the engine revolution number at the target engine revolution number. Then, the second stop control circuit selectively switches between the first and second signals based on the sensed crank angle, and provides the selected signal to the drive circuit to cause the engine to stop at a predetermined crank angle.

Still further, fuel is cut when the engine enters the stop control mode, whereby the number of revolutions of the engine becomes lower. By the first stop control circuit and then the second stop control circuit, one of the first and second signals is selectively switched and provided to the drive circuit to allow the engine to stop at the predetermined crank angle.

Preferably, the engine stop control circuit includes a circuit applying positive torque and negative torque respectively in pulses.

In accordance with the present invention, the motor generator can be operated as a motor to apply positive torque in pulses to positively rotate the engine, and the motor generator can be operated as a power generator to apply negative torque in pulses to apply the brake on the engine to stop rotation thereof to stop the engine at a predetermined crank angle.

Further preferably, the engine stop control circuit includes a circuit calculating at least one of a signal width, a signal interval, and a signal count of the first signal such that the number of revolutions of the engine (also referred to as "engine revolution number" hereinafter) attains a target number of revolutions of the engine, and a circuit providing the calculated first signal to the drive circuit.

In accordance with the present invention, the first signal is calculated and output to the drive circuit such that the engine revolution number attains the target engine revolution number. The first signal is used to calculate at least one of the signal width, the signal interval, and the signal count of the first signal. In other words, the first signal is output in pulses. At least one of the width, interval and count of the pulses is calculated with the feedback control system implemented such that the engine revolution number attains the target engine revolution number. Those not calculated are to be set in advance.

Further preferably, the first stop control circuit includes a circuit calculating at least one of a signal width, a signal interval and a signal count of the first signal such that the engine revolution number attains the target engine revolution number, and a circuit providing the calculated first signal to the drive circuit. The second stop control circuit includes a circuit calculating at least one of the signal width, signal interval and signal count of the first signal such that the crank angle attains a predetermined crank angle, and a circuit providing the calculated first signal to the drive circuit.

In accordance with the present invention, the first signal is output in pulses by the first and second stop control circuits. By the first and second stop control circuits, at least one of the width, interval, and count of the pulses is calculated by implementing the feedback control system such that the number of revolutions of the engine attains the target number of revolutions of the engines, and the crank angle attains a predetermined crank angle. Those not calculated are to be set in advance.

Further preferably, the control circuit further includes a circuit providing to the drive circuit a signal that sets a field current value of the motor generator equal to or above a predetermined current value when the engine is to be stopped temporarily.

Since the field current value of the motor generator is set equal to or above a predetermined current value when the engine is to be stopped temporarily in accordance with the present invention, the motor generator can be operated as a motor with superior response when the first signal causing the motor generator to operate as the motor is applied to the drive circuit.

Further preferably, the predetermined crank angle corresponds to the smallest engine starting torque at the first cylinder attaining complete explosion when the engine is restarted.

In accordance with the present invention, the engine starting torque of the first cylinder attaining complete explosion is smallest when the engine is restarted in accordance with the present invention, high torque is no longer required when the engine is restarted. Only a low starting current is required.

Further preferably, the predetermined crank angle is the angle where the first cylinder attaining complete explosion when the engine is restarted is located before the top dead center during the compression stroke.

Since the first cylinder attaining complete explosion is at a position before the top dead center during the compression stroke when the engine is restarted in accordance with the present invention, restarting can be realized with the lowest engine starting torque.

Further preferably, the control circuit includes an engine restart control circuit to crank the engine up by selectively switching and providing to the drive circuit a first signal to operate the motor generator as a motor and a second signal to operate the motor generator as a generator when the engine is to be restarted from a temporary engine stop status.

By using a terminal conventionally provided in a motor generator for receiving first and second signals in accordance with the present invention, the motor generator can be driven as a motor or a power generator in a switchable manner to allow inrush current to be reduced. Accordingly, it is no longer necessary to incorporate a switching circuit to avoid generation of inrush current. As a result, an economic vehicle control device to implement an engine restart system can be provided.

Further preferably, the control circuit further includes a circuit providing to the drive circuit a signal that sets a field current value of the motor generator equal to or below a predetermined current value in a temporary engine stop status.

Since the field current value of the motor generator is set equal to or below a predetermined current value (for example, 0) when in a temporary engine stop status, power consumption caused by wasteful field current can be obviated even in the case where the alternator component is used as the motor generator.

Further preferably, the signal to set the field current value of the motor generator is output to the drive circuit as a power generation control value of the drive circuit.

In accordance with the present invention, the drive circuit connected to the motor generator conventionally includes a terminal for receiving first and second signals (for example, a terminal receiving the first signal at a High signal level and the second signal at a Low signal level), and a terminal to which a power generation control value is input. Therefore, the field current value can be controlled through the terminals.

Further preferably, the armature and rotor of the motor generator are components of an alternator, and the drive circuit is an air-cooled inverter circuit.

In accordance with the present invention, the motor generator can be fabricated economically since it is fabricated using the components of an alternator. Furthermore, the PCU including the inverted circuit can be fabricated economically since the inverter circuit is based on air-cooling instead of water-cooling.

Thus, a vehicle control device to realize an engine restart system can be provided at low cost.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a control block diagram of a vehicle in accordance with an embodiment of the present invention.
Fig. 2 shows a structure of the motor generator of Fig. 1.
Fig. 3 is an electric circuit diagram of the motor generator.
Fig. 4 represents the relationship between the crank angle and starting torque of the engine.
Fig. 5 represents the sequence of strokes at respective cylinders of the engine.
Fig. 6 is a flow chart representing a control structure of an engine stop control program executed by an EFI_ECU.
Fig. 7 is a flow chart representing a control structure of an engine revolution number MG feedback control program executed by the EFI_ECU.
Fig. 8 is a flow chart representing a control structure of a crank angle MG feedback control program executed by the EFI_ECU.
Fig. 9 is a flow chart representing a control structure of an engine restart control program executed by the EFI_ECU.
Fig. 10 is a timing chart of the status change in a vehicle in accordance with an embodiment of the present invention.
Fig. 11 represents the relationship between the duty ratio of an RLO terminal and an RLO control value.
Fig. 12 is a timing chart representing change in the number of revolutions of the engine NE at the vehicle in accordance with an embodiment of the present invention.

### DESCRIPTION OF THE PREFERRED EMBODIMENTS

Embodiments of the present invention will be described hereinafter with reference to the drawings. In the following description, the same components have the same reference characters allotted. Their designation and function are identical. Therefore, detailed description thereof will not be repeated.

Although the following description is based on a vehicle incorporated with an idling stop system, the present invention is not limited thereto. The present invention is applicable to a system that executes restart control through a motor generator after the engine is temporarily stopped in a vehicle incorporating both an engine and a motor generator.

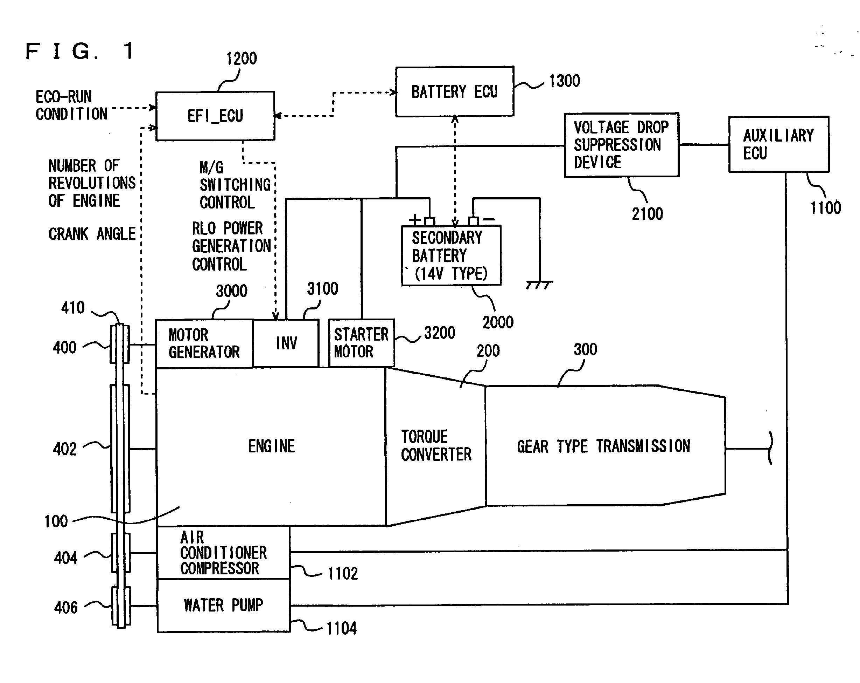

The control of a vehicle in accordance with an embodiment of the present invention will be described hereinafter with reference to the block diagram of Fig. 1. Although the power train of the present vehicle will be described as including a torque converter and a gear type transmission, the present invention is not limited thereto. For example, a CVT (Continuously Variable Transmission) of the belt type or toroidal type may be used instead of the gear type transmission. Furthermore, the rechargeable accumulator will be described identified as a secondary battery.

Referring to Fig. 1, the power train of the present vehicle includes an engine 100 identified as a general internal combustion engine, a torque converter 200 connected to the output shaft of engine 100, identified as a fluid coupling with torque amplify capability, and a gear type transmission 300 connected to the output shaft of torque converter 200. A crank shaft pulley 402 of engine 100 is connected to a motor generator pulley 400 of a motor generator 3000, an air conditioner compressor pulley 404 of an air conditioner compressor 1102, and a water pump pulley 406 of a water pump 1104, via a belt 410.

This vehicle has engine 100 under control of an EFI_ECU (Electronic Fuel Injection_Electronic Control Unit) 1200 for executing an idling stop system. When the vehicle status associated with the eco-run condition input to EFI_ECU 1200 satisfies a predetermined condition, the idling stop system notifies an HV_ECU (Hybrid Vehicle_Electronic Control Unit) not shown satisfaction of the idling stop condition. When the eco-run condition is no longer satisfied, EFI_ECU 1200 functions to supply the power of secondary battery 2000 from an inverter 3100 to motor generator 3000 to operate motor generator 3000 as a motor, whereby crank shaft pulley 402 of engine 100 is rotated through motor generator pulley 400 and belt 410 to restart (crank up) engine 100. Inverter 3100 is an air-cooled inverter to which an M/G switching control signal and an RLO power generation control signal are input from EFI_ECU 100.

The number of revolutions of the engine (engine revolution number) NE and a crank angle α are input to EFI_ECU 1200 from engine 100. EFI_ECU 1200 temporarily stops engine 100 in a manner to expedite restarting. At this stage, EFI_ECU 1200 uses only an M/G switching signal to inverter 3100 without conducting PWM feedback control or switching control. EFI_ECU 1200 also functions to obviate generation of inrush current when engine 100 is restarted through motor generator 3000. EFI_ECU 1200 uses only the M/G switching signal to inverter 3100 in this case. EFI_ECU 1200 uses an RLO power generation control signal towards inverter 3100 to control the current value of field current If of motor generator 3000.

A general lead battery having the rated voltage of 14V is used for secondary battery 2000. Secondary battery 2000 is under control of a battery ECU 1300. Power is supplied from secondary battery 2000 to inverter 3100 and starter motor 3200. Engine 100 subjected to idling-stop is restarted by motor generator 3000 or starter motor 3200. When the ignition switch is turned to the start position, engine 100 will be started through starter motor 3200 in a general manner.

Secondary battery 2000 is connected to an auxiliary ECU 1100 via a voltage drop suppression device 2100 (for example, backup boost converter, capacitor, lithium battery). Auxiliary ECU 1100 is connected to air conditioner compressor 1102 and water pump 1104. Air conditioner compressor 1102 and water pump 1104 are under control of auxiliary ECU 1100. Since engine 100 is stopped during an idling-stop mode, air conditioner compressor pulley 404 and water pump pulley 406 cannot be rotated by belt 410 via crank shaft puller 402 of engine 100. Therefore, auxiliary ECU 1100 provides control so as to drive air conditioner compressor 1102 and water pump 1104 using the power of secondary battery 2000.

An oil pump not shown is actuated through secondary battery 2000 in an idling-stop mode, likewise water pump 1104.

Air conditioner compressor 1102 and water pump 1104 are internally provided with the function to select whether to be driven through engine compressor pulley 404 or water pump pulley 406, or driven by the motor based on the power from secondary battery 2000. As an alternative to such functions, an electromagnetic clutch may be provided at crank shaft pulley 402 of engine 100. In an idling stop mode, the electromagnetic clutch is rendered non-transmissive to disconnect engine 100, and air conditioner compressor 1102 and/or water pump 1004 are actuated through motor generator 3000.

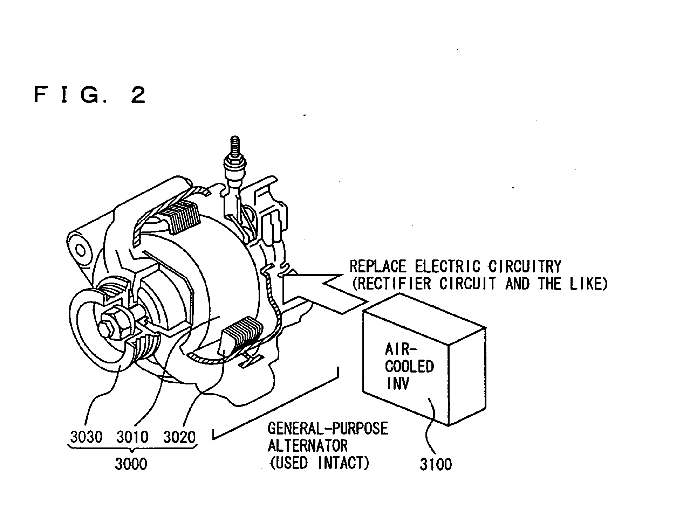

Fig. 2 shows a structure of motor generator 3000 of Fig. 1. As shown in Fig. 2, motor generator 3000 employed in the vehicle of the present embodiment is an inexpensive motor generator using the components of a general-purpose alternator.

In general, an alternator is rotated by a pulley 3030 connected via crank shaft pulley 402 of engine 100 and belt 410. The power generated at an alternator stator unit 3020 by the rotation of an alternator rotor unit 3010 is converted by a rectifier circuit called a rectifier from alternating current into direct current, which is supplied to secondary battery 2000.

Such a general-purpose alternator is widely employed in common vehicles. The fabrication cost of the general-purpose alternator is extremely low. The above-described alternator rotor unit 3010 and alternator stator unit 3020 are adapted for the rotor and stator of motor generator 3000 of the present invention. Pulley 3030 of Fig. 2 is identical to motor generator pulley 400 of Fig. 1.

Inverter 3100 is employed instead of the aforementioned rectifier circuit. Inverter 3100 is a driver to operate alternator rotor unit 3010 and alternator stator unit 3020 as motor generator 3000. Inverter 3100 is an air-cooled inverter. This provides the advantage that the cost can be lowered as compared to a water-cooled inverter.

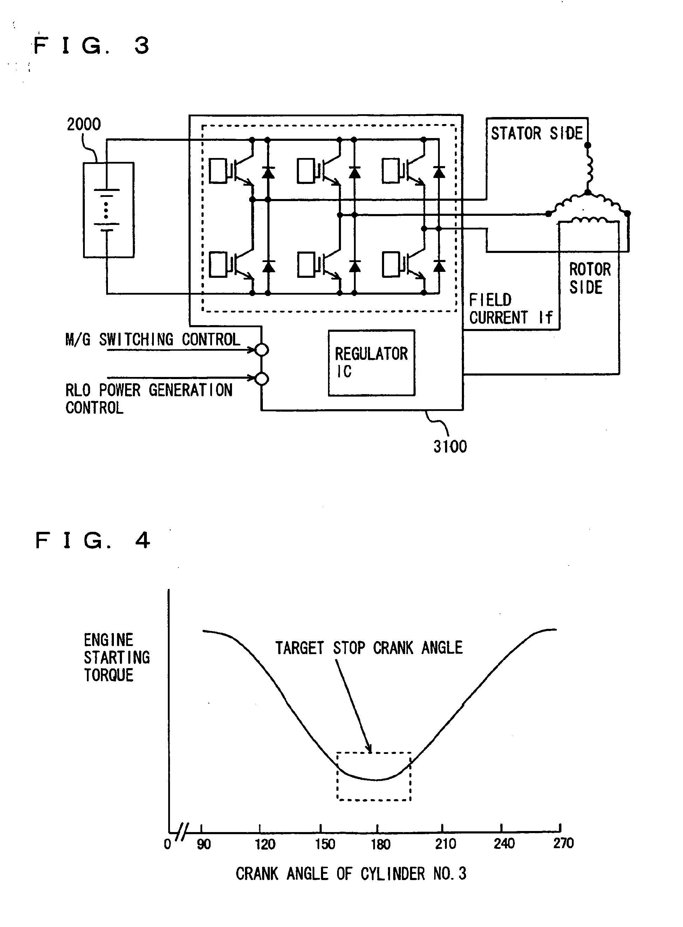

Fig. 3 shows the electric circuitry of motor generator 3000 and inverter 3100. Inverter 3100 includes an inverter circuit configured to supply the power of 3 phases to alternator stator unit 3020 by a plurality of switching circuits. By adjusting the current value of field current If across alternator rotor unit 3010, the torque generated from motor generator 3000 and the output power can be controlled when motor generator 3000 is operated as a motor and a generator, respectively.

Secondary battery 2000 supplies power to the switching circuits of inverter 3100 to supply power to alternator stator unit 3020 and/or alternator rotor unit 3010.

Inverter 3100 is provided with a terminal to which the M/G switching control signal from EFI_ECU 1200 is input and a terminal to which the RLO power generation control signal is input. The terminal to which the M/G switch control signal is input is set so as to receive a High signal and a Low signal to cause motor generator 3000 to be operated as a motor and a generator, respectively. In other words, a signal of either the high level or low level is input.

With regards to the terminal to which the RLO power generation control signal is input, a signal having the power generation control value represented by a predetermined duty ratio is input.

The relationship between the crank angle and engine starting torque of engine 100 of the present embodiment will be described with reference to Fig. 4 hereinafter. Although the description is based on engine 100 of four cylinders, the present invention is not limited thereto.

As shown in Fig. 4, the relationship between the crank angle and engine starting torque will be described focusing on one cylinder (here, Cylinder No. 3). The engine starting torque varies so as to draw a sine curve depending upon the crank angle of the cylinder. Since the engine starting torque is lowest when the crank angle of the cylinder is in the vicinity of 180°, the crank angle in the vicinity thereof is set as the target crank angle to be stopped. In the present embodiment, Cylinder No. 3 is the first cylinder attaining complete explosion when engine 100 is to be restarted.

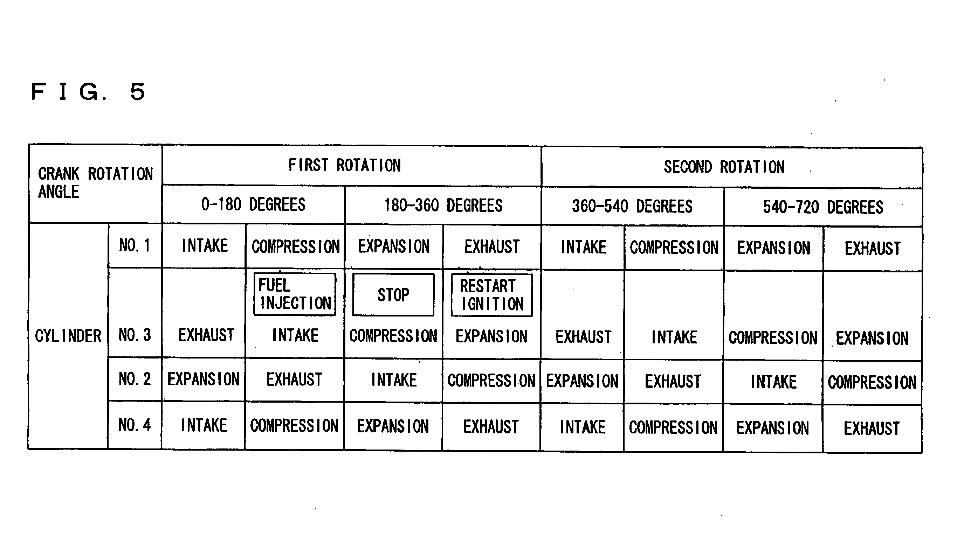

The stroke sequence of each cylinder of engine 100 is shown in Fig. 5. Detailed description will be provided based on particularly Cylinder No. 3. It is assumed that engine 100 is a 4-cycle gasoline engine. The intake stroke, compression stroke, expansion stroke and exhaust stroke are sequentially repeated at each cylinder. At Cylinder No. 3, control is provided such that fuel injection is conducted at the intake stroke, and engine 100 stops temporarily during the subsequent compression stroke. Then, when the idling stop condition is no longer satisfied, EFI_ECU 1200 conducts ignition for restart with Cylinder No. 3 as the first cylinder attaining complete explosion. Accordingly, Cylinder No. 3 exhibits transition to the expansion stroke and exhaust stroke. Then, ignition of restart is conducted in the order of the Cylinder No. 2, Cylinder No. 4, and Cylinder No. 1. As shown in Figs. 4 and 5, the target stop crank angle is set so that the engine starting torque at the time of restarting subsequent to temporary stop is lowest when engine 100 is to be stopped temporarily in an idling stop mode.

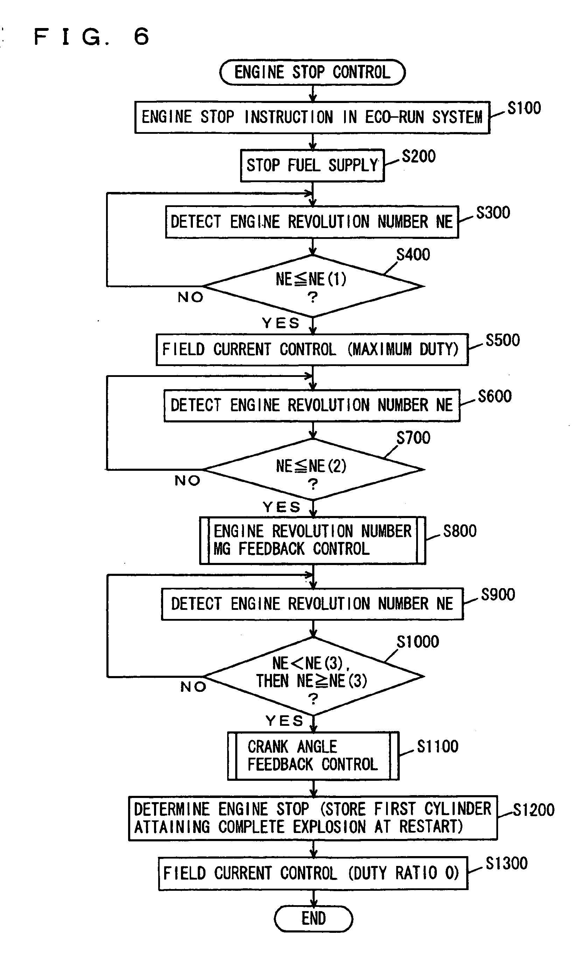

Control of an engine stop control program executed by EFI_ECU 1200 in accordance with the present embodiment will be described with reference to Fig. 6.

At step (step abbreviated as S hereinafter) 100, EFI_ECU 1200 provides engine stop control in the eco-run system. This process is based on the determination of whether the status of the vehicle in association with the eco-run condition input to EFI_ECU 1200 satisfies the predetermined condition or not.

At S200, EFI_ECU 1200 controls engine 100 so as to stop fuel supply. At S300, EFI_ECU 1200 detects the engine revolution number NE. This process is based on the engine revolution number signal applied to EFI_ECU 1200 from an engine revolution number sensor provided at the crank shaft or the like of engine 100.

At S400, EFI_ECU 1200 determines whether the detected engine revolution number NE is equal to or below a predetermined engine revolution number threshold value NE (1). At engine 100 to which fuel supply is stopped, engine revolution number NE gradually becomes lower. Determination is made whether that engine revolution number NE is equal to or lower than the predetermined engine revolution number threshold value NE (1). When engine revolution number NE becomes equal to or lower than NE (1) (YES at S400), control proceeds to S500, otherwise (NO at S400), control proceeds to S300. The process of detecting engine revolution number NE at S300 is repeated until the predetermined engine revolution number threshold value NE (1) is reached.

At S500, EFI_ECU 1200 executes field current control with the maximum duty ratio. At this stage, an RLO power generation control signal is output from EFI_ECU 1200 to inverter 3100 with the maximum duty ratio. As a result, control is provided so that the value of field current If is highest at inverter 3100.

At S600, EFI_ECU 1200 detects engine revolution number NE. At S700, EFI_ECU 1200 determines whether engine revolution number NE detected at S600 is equal to or below a predetermined engine revolution number threshold value NE (2). This predetermined engine revolution number threshold value NE (2) is lower than predetermined engine revolution number threshold value NE (1) set forth above. When the detected engine revolution number NE is equal to or below predetermined engine revolution number threshold value NE (2) (YES at S700), control proceeds to S800, otherwise (NO at S700), control returns to S600. The process of detecting engine revolution number NE again at S600 is repeated until the detected engine revolution number NE becomes equal to or below predetermined engine revolution number threshold value NE (2).

At S800, EFI_ECU 1200 executes engine revolution number MG feedback control. This control at S800 will be described in detail afterwards.

At S900, EFI_ECU 1200 detects the engine revolution number NE At S1000, EFI_ECU 1200 determines whether the engine revolution number NE detected at S900 becomes lower than predetermined engine revolution number threshold value NE (3), and then equal to or above predetermined engine revolution number threshold value NE (3). Predetermined engine revolution number threshold value NE (3) is lower than predetermined engine revolution number threshold value NE (2) set forth above. For example, predetermined engine revolution number threshold value number NE (3) is 0. When the detected engine revolution number NE becomes lower than and then equal to or above predetermined engine revolution number threshold value (NE (3) (YES at S1000), control proceeds to S1100, otherwise (NO at S1000), control returns to S900. The process of detecting engine revolution number NE again and determining whether the detected engine revolution number NE becomes lower than and then equal to or above predetermined engine revolution number threshold value NE (3) is repeatedly executed.

At S1100, EFI_ECU 1200 executes crank angle MG feedback control. Details of the process at S1100 will be described afterwards.

At S1200, EFI_ECU 1200 determines whether the engine has stopped or not. The first cylinder attaining complete explosion for restarting is stored. This is, for example, the third cylinder (Cylinder No. 3) shown in Figs. 4 and 5.

At S1300, EFI_ECU 1200 executes field current control with duty ratio 0. At this stage, an RLO power generation instruction value is output from EFI_ECU 1200 to inverter 3100 with the duty ratio of 0. Inverter 3100 receiving this RLO power generation control signal provides control so as to set the value of field current If to 0.

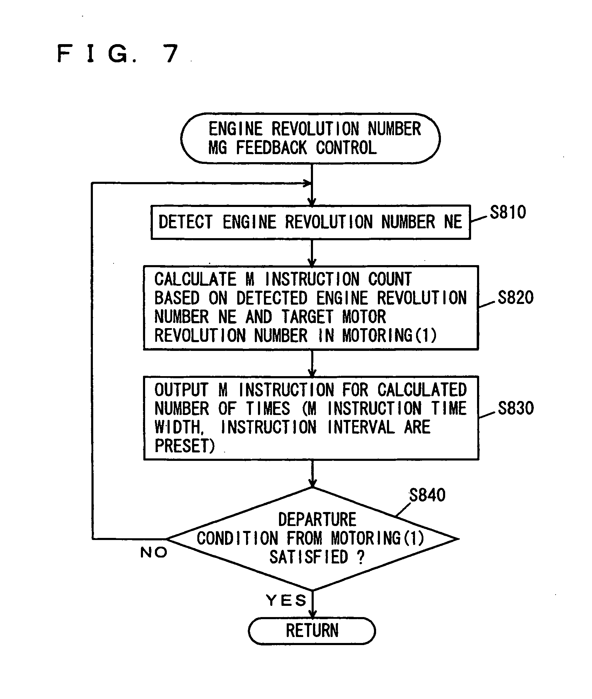

Control of engine revolution number MG feedback at S800 of Fig. 6 will be described hereinafter with reference to Fig. 7.

At S810, EFI_ECU 1200 detects engine revolution number NE At S820, EFI_ECU 1200 calculates the M instruction count (the number of times to output pulses of an M/G switching signal at the High level to cause motor generator 3000 to be operated as a motor) based on the detected engine revolution number NE and target motor revolution number of motoring (1).

At S830, EFI_ECU 1200 outputs an M instruction for the calculated number of times. At this stage, EFI_ECU 1200 transmits a High signal to inverter 3100 so as to set the M/G switching control signal to the M side. The M instruction time width and instruction interval are to be set in advance.

At S840, EFI_ECU 1200 determines whether the condition of departure from motoring (1) is satisfied or not. This determination is based on, for example, engine revolution number NE of engine 100. When the departure condition from motoring (1) is satisfied (YES at S840), the engine revolution number MG feedback control ends, and control returns to S900 of Fig. 6, otherwise (NO at S840), control returns to S810. Engine revolution number NE is detected again, and the M instruction count to provide feedback control is calculated and output to inverter 3100 based on the detected engine revolution number NE and target revolution number.

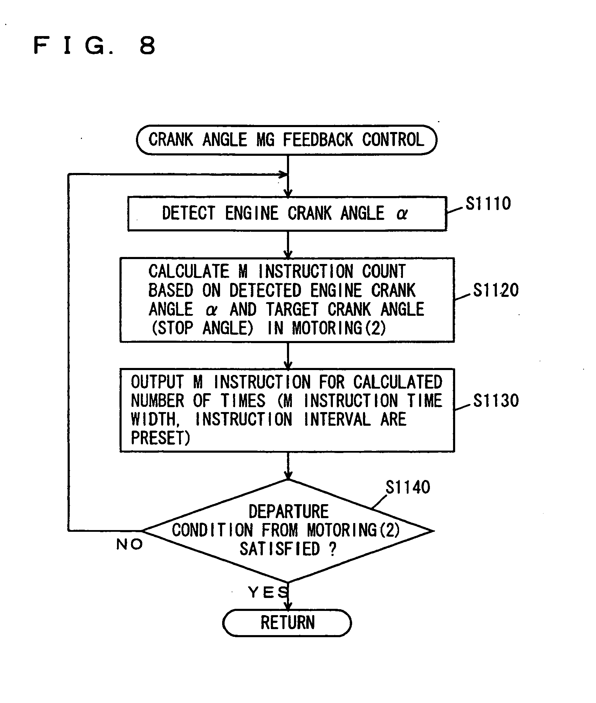

The crank angle MG feedback control carried out at S1100 of Fig. 6 will be described hereinafter with reference to Fig. 8.

At S1110, EFI_ECU 1200 detects crank angle α of engine 10. At S 1120, EFI_ECU 1200 calculates the M instruction count based on the detected crank angle α of engine 100 and target stop crank angle (stop angle) in motoring (2). At S1130, EFI_ECU 1200 outputs an M instruction to inverter 3100 by the calculated number of times. Likewise the process of S830 of Fig. 7 set forth above, the M/G switching control signal transmitted to inverter 3100 from EFI_ECU 1200 is output at a High level. The M instruction time width and instruction interval are to be set in advance.

At S 1140, EFI_ECU 1200 determines whether the condition of departure from motoring (2) is satisfied or not. This determination is based on, for example, crank angle α of engine 100 or engine revolution number NE. When the departure condition from motoring (2) is satisfied (YES at S1140), control returns to S1200 of Fig. 6, otherwise (NO at S1140), control returns to S1110 where crank angle α of engine 100 is detected again. Feedback control is conducted so that crank angle α of engine 100 attains the target crank angle in motoring (2), and the M instruction count is transmitted to inverter 3100.

In the process of S830 of Fig. 7 and S1130 of Fig. 8, the motor instruction time width and motor instruction interval may be calculated and output instead of calculating the number of times of the M instruction (motor instruction) for output.

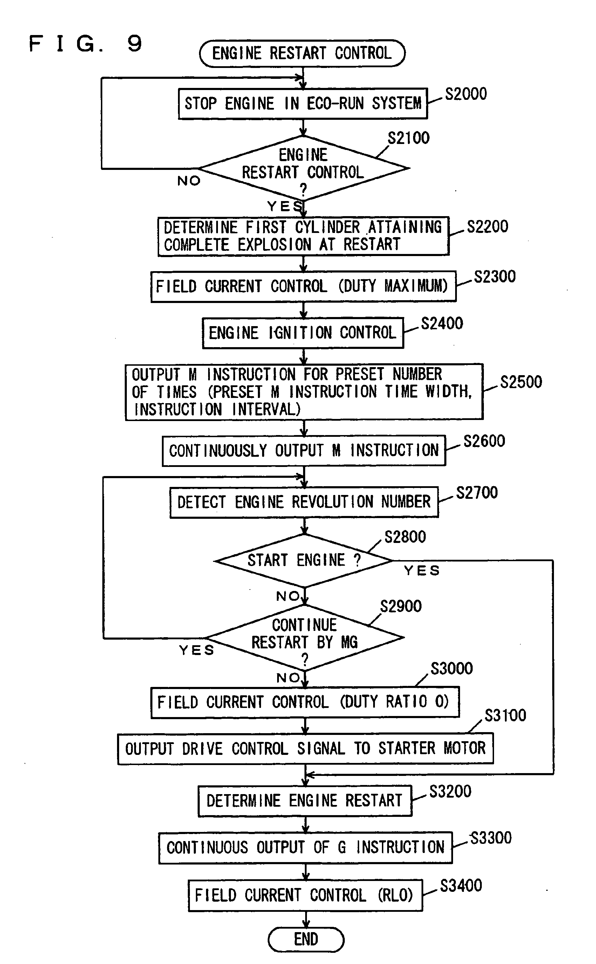

Control of the engine restart the control program executed by EFI_ECU 1200 will be described with reference to Fig. 9.

At S2000, EFI_ECU 1200 stops engine 100 in the eco-run system. At S2100, EFI_ECU 1200 determines whether to output an engine restart instruction or not. An engine restarting instruction is output when the status of the vehicle in association with the eco-run condition input to EFI_ECU 1200 no longer satisfies the predetermined condition. When determination is made to output an engine restart instruction (YES at S2100), control proceeds to S2200, otherwise (NO at S2100), control returns to S2000.

At S2200, EFI_ECU 1200 determines the first cylinder attaining complete explosion when the engine is restarted. Identification of the first cylinder attaining complete explosion is stored in advance in a memory of EFI_ECU 1200 at S1200 of Fig. 6. At S2300, EFI_ECU 1200 provides control so that the value of field current If is maximum. At this stage, a signal with an RLO power generation control value of the highest duty ratio is output from EFI_ECU 1200 to inverter 3100. Inverter 3100 provides control so that the value of field current If becomes maximum upon receiving this signal.

At S2400, EFI_ECU 1200 conducts engine ignition control. At this stage, engine ignition control is conducted with respect to Cylinder No. 3 shown in Fig. 5. At S2500, EFI_ECU 1200 outputs an M instruction a predetermined number of times. The M instruction time width and instruction interval are to be set in advance. In addition, a pulse signal whose M/G switching control is at a High level is output from EFI_ECU 1200 to inverter 3100 a predetermined number of times.

At S2600, EFI_ECU 1200 continuously outputs M instructions. At S2700, EFI_ECU 1200 detects engine revolution number NE. At S2800, EFI_ECU 1200 determines whether engine 100 has started or not based on the detected engine revolution number NE. When engine 100 is started (YES at S2800), control proceeds to S3200, otherwise (NO at S2800), control proceeds to S2900.

At S2900, EFI_ECU 1200 determines whether to continue the restarting operation by motor generator 3000. This determination is based on, for example, the temperature of motor generator 3000 or inverter 3100. In other words, determination is made that restarting is not to be continued if the temperature of motor generator 3000 or inverter 3100 is extremely high. When determination is made of continuing the restarting operation by motor generator 3000 (YES at S2900), control proceeds to S2700, otherwise (NO at S2900), control proceeds to S3000.

At S3000, EFI_ECU 1200 provides control so that the value of field current If becomes 0. At this stage, a signal that causes the RLO power generation instruction to have the duty ratio of 0 is output from EFI_ECU 1200 to inverter 3100. Upon receiving this signal, inverter 3100 provides control so that the value of field current If becomes 0.

At S3100, EFI_ECU 1200 outputs a drive control signal to starter motor 3200. This means that the operation of restarting engine 100 by motor generator 3000 is aborted, and has switched to the operation of restarting by starter motor 3200.

At S3200, EFI_ECU 1200 determines engine restart. At S3300, EFI_ECU 1200 outputs a G instruction continuously to inverter 3100. At S3400, EFI_ECU 1200 provides field current control. Specifically, EFI_ECU 1200 calculates a power generation control value based on the charge status of the battery ECU from battery ECU 1300 and provides the calculated value to inverter 3100 from EFI_ECU 1200 as an RLO power generation control value. Inverter 3100 controls the value of field current If of motor generator 3000 to control power generation based on the received value.

The operation of the vehicle in accordance with the present invention, particularly engine revolution number NE, M/G switching control signal, and field current If will be described in detail hereinafter based on the structure and flow charts set forth above.

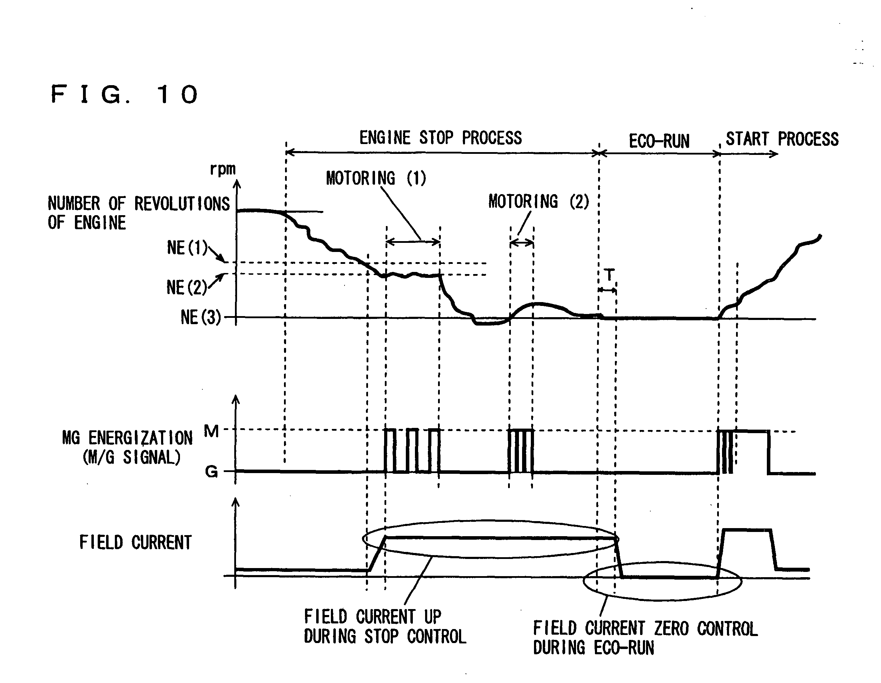

When a vehicle incorporated with an idling stop system halts at a red light or the like, engine stop control is conducted in the eco-run system based on the eco-run condition (S100). Fuel supply is suppressed (S200), and the engine revolution number NE is detected (S300). When engine revolution number NE becomes equal to or lower than predetermined engine revolution number threshold value NE (1) (YES at S400), field current control is conducted with the maximum duty ratio (S500). Since engine revolution number NE becomes predetermined engine revolution number threshold value NE (1) as shown in Fig. 10, control is provided such that the value of field current If is maximum.

When engine revolution number NE is detected (S600), and the detected NE becomes equal to or lower than predetermined engine revolution number threshold value NE (2) (YES at S700), engine revolution number MG feedback control is executed (S800). Engine revolution number NE is detected (S810). Feedback control is executed based on the detected engine revolution number NE and target motor revolution number in motoring (1). The M instruction count is calculated (S820), and an M instruction is output for the calculated number of times (S830).

As shown in Fig. 10, a pulse signal is output a predetermined number of times with the M/G switching control signal set to the High level in motoring (1). At this stage, feedback control is provided so as to switch between motor generator 3000 operating as a motor and a generator based on the signal from inverter 3100 so as to maintain engine revolution number NE at the predetermined engine revolution number threshold value NE (1). Since the value of field current If is maximum, motor generator 3000 can be switched with favorable response between the motor function and the generator function through the M/G switching control signal.

Following motoring (1), engine revolution number NE is reduced so as to become lower than predetermined engine revolution number threshold value NE (3) and then higher than predetermined engine revolution number threshold value NE (3) (YES at S1000), in which case crank angle MG feedback control is executed (S1100)

At this stage, motoring (2) shown in Fig. 10 is effected. During motoring (2), feedback control is executed based on crank angle α. Crank angle α is detected (S1100), and feedback control is executed based on the detected engine crank angle α and the target crank angle in motoring (2). The M instruction count is calculated (S1130), and an M instruction is output the calculated number of times (S1140).

At this stage, a pulse signal is output a predetermined number of times with the M/G switching control signal set to the High level in motoring (2), as shown in Fig. 10. Feedback control is provided so that, based on the signal from inverter 3100, motor generator 3000 is switched to function as a motor or a generator for crank angle α of engine 100 to coincide with the target crank angle. Since the value of field current If is maximum, motor generator 300 can be switched in favorable response when switching between the motor function and generator function through an M/G switching control signal.

When engine revolution number NE of engine 100 becomes 0 and crank angle α of engine 100 coincides with the target stop crank angle, engine stop determination is made, and identification of the first cylinder attaining complete explosion for restarting is stored (S1200). Then, the eco-run mode is continued with engine 100 stopped.

At this stage, field current control is executed with the duty ratio of 0 (S1300). As shown in Fig. 10, the value of field current If during eco-running is controlled so as to be 0.

When the eco-run condition becomes unsatisfied during eco-run control, an engine restart instruction is output (YES at S2100). The first cylinder attaining complete explosion for restart is defined (S2200). The field current control is executed with maximum duty ratio (S2300). Engine ignition control is conducted (S2400). A motor instruction is output for a predetermined number of times (S2500). Following continuous output of a motor instruction (S2600), engine revolution number NE is detected (S2700). When engine 100 is started (YES at S2800), engine restart determination is executed (S3200).

As shown in Fig. 10, a pulse signal with the M/G switching control signal representing an M instruction is output repeatedly for a predetermined number of times at the start process. Therefore, significant increase of inrush current can be avoided. Furthermore, since the value of field current If is maximum, the engine can be restarted in favorable response.

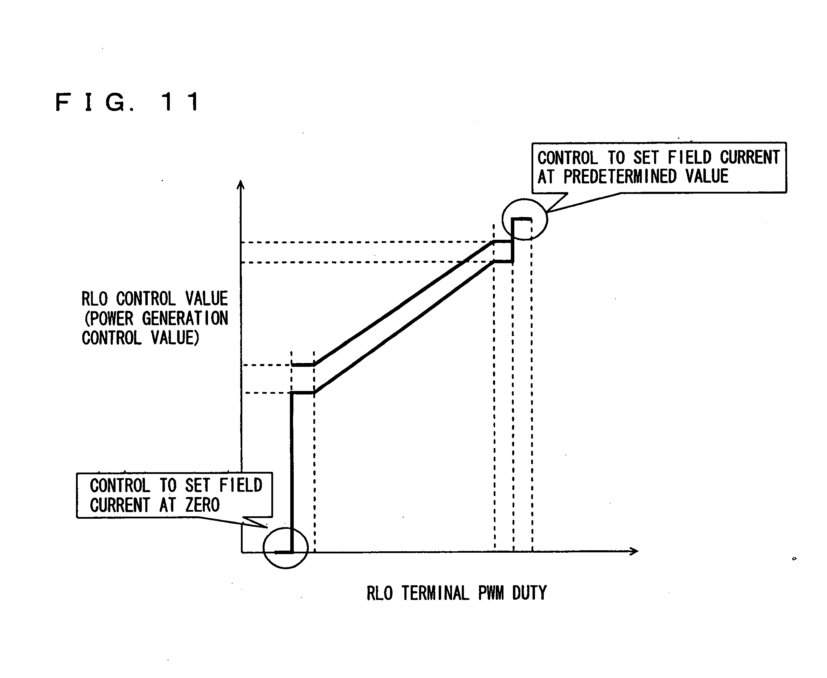

The relationship between the duty ratio of the RLO terminal and an RLO control value (power generation control value) is shown in Fig. 11. The RLO control value plotted along the ordinate of Fig. 11 represents a voltage signal applied to the RLO power generation control terminal of inverter 3100. The PWM duty ratio of the RLO terminal and the RLO control value exhibit hysteresis, and are characterized as set forth below.

The RLO control value is set to 0 when the duty ratio of the RLO terminal is in a predetermined range. This presents that the value of field current If during eco-run is controlled to be 0. In the range where the duty ratio of the RLO terminal is in the vicinity of a predetermined maximum level, the RLO control value is set to maximum. This corresponds to the case where the value of field current If is controlled to be maximum when engine 100 is stopped temporarily and when engine 100 is restarted.

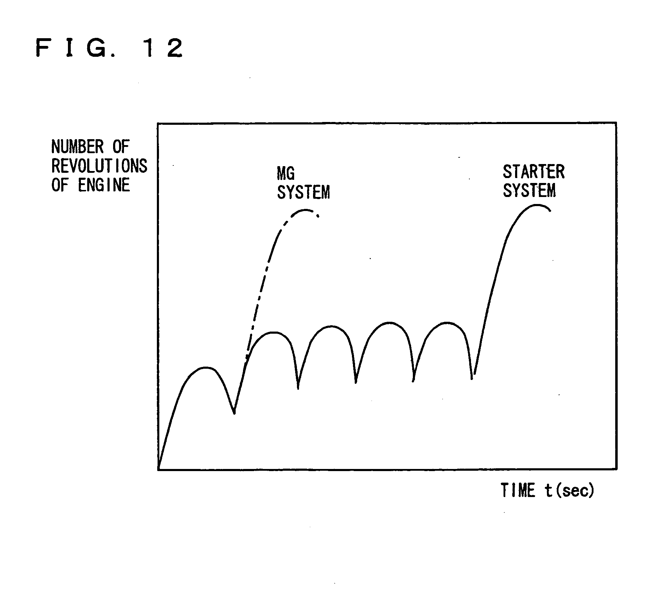

Fig. 12 shows the change in engine revolution number NE over time when engine 100 is restarted based on the motor generator system and when engine 100 is restarted based on the starter system. As compared to the case where engine 100 is restarted by the starter motor, restarting the engine by the motor generator can be conducted with more favorable response. This is because the response is poor when using starter motor 3200 since starter motor 3200 is driven by engaging the pinion gear with the gear of the flywheel of engine 100 through a magnet switch.

In accordance with the EFI_ECU 1200 that is the control device of the present embodiment, motoring is effected so that the engine starting torque when the engine is to be restarted is at the lowest position when the engine is to be stopped in the idling stop system. In motoring (1), feedback control is provided such that engine revolution number NE attains the target engine revolution number NE The number of pulses representing an M instruction in M/G switching control is calculated and transmitted to inverters 3100. In motoring (2), feedback control is provided such that crank angle α attains the target crank angle in order to achieve a position where the starting torque of engine 100 is lowest when the engine is to be restarted. An M/G switching control signal is output as a pulse signal of M instruction from EFI_ECU 1200 to inverter 3100. Since the duty ratio of the field current is set at the maximum and direct current If takes the highest level, switching of motor generator 3000 to function as a motor or a generator is conducted in response to an M/G switching control signal in a short pulse width, exhibiting favorable response.

When the engine is stopped by the idling stop system, an output is provided from EFI_ECU 1200 to inverter 3100 so that the duty ratio of the RLO power generation control becomes 0. Control is provided so as to set the value of field current If of motor generator 300 from inverter 3100 to 0. Accordingly, waste of power in field current If of motor generator 3000 can be eliminated.

When the condition of the idling stop system is no longer satisfied, the engine is started again. Since a cylinder that corresponds to the lowest starting torque is stored as the first cylinder attaining complete explosion, EFI_ECU 1200 conducts ignition control of that cylinder, and the engine is cranked up by motor generator 3000. Even in the case where a large torque cannot be generated since the rotor and stator of a general-purpose alternator is used for motor generator 3000, engine 100 can be restarted based on the torque output from motor generator 3000 since engine 100 is stopped at a crank angle that corresponds to a small starting torque. At this stage, control is provided so that field current If is maximum. Such a motor generator is inexpensive since the rotor and stator of a general-purpose alternator are employed.

The timing to start and end motoring (1) is not limited to that based on engine revolution number NE of engine 100 set forth above. Furthermore, the timing to start and end motoring (2) is not limited to that based on engine revolution number NE and crank angle α of engine 100 set forth above.

When the status of a vehicle satisfies a predetermined condition, an EFI_ECU (1200) executes idling stop control so as to stop the engine (100) temporarily. The EFI_ECU (1200) includes a circuit to stop an engine (100) by switching between a signal that causes a motor generator (3000) to be operated as a motor and a signal that causes the motor generator (3000) to be operated as a generator, a circuit setting the field current of the motor generator (3000) to 0 during the stop of the engine (100), and a circuit restarting the engine (100) by switching between a signal that causes the motor generator (3000) to be operated as a motor and a signal that causes the motor generator (3000) to be operated as a generator when the engine (100) is to be restarted

## Claims

1. A vehicle control device **(1200)** incorporated with a system that stops an engine **(100)** temporarily when status of the vehicle satisfies a predetermined condition, said vehicle incorporating a motor generator **(3000)** that restarts said engine **(100)** after said temporary stop, and a rechargeable accumulator **(2000)** connected to said motor generator **(3000),** said control device **(1200)** comprising:
a drive circuit connected to said accumulator **(2000),**
a control circuit connected to said drive circuit,
a sensor unit sensing the number of revolutions of said engine **(100),** and
a sensor unit sensing a crank angle of said engine **(100),** wherein
said control circuit is adapted to control said motor generator **(3000)** via said drive circuit,
said drive circuit is adapted to drive said motor generator **(3000)** based on a signal received from a control circuit,
said control circuit comprises an engine stop control circuit stopping said engine **(100)** at a predetermined crank angle by selectively switching and providing to said drive circuit a first signal causing said motor generator **(300)** to be operated as a motor and a second signal causing said motor generator **(3000)** to be operated as a generator during a period starting from initiating control of stopping the engine **(100)** temporarily up to engine **(100)** stop,
**characterized in that**
said engine stop control circuit comprises
a first stop control circuit selectively switching between said first signal and said second signal for output to said drive circuit based on said sensed number of revolutions, and
a second stop control circuit selectively switching between said first signal and said second signal for output to said drive circuit based on said sensed crank angle,
wherein said first stop control circuit executes engine stop control when the number of revolutions of said engine attains a first predetermined number of revolutions of the engine, and said second stop control circuit executes engine stop control when the number of revolutions of said engine attains a second predetermined number of revolutions of the engine, said first predetermined number of revolutions of said engine is higher than said second predetermined number of revolutions of the engine.

2. The vehicle control device **(1200)** according to claim 1, wherein said engine stop control circuit comprises a circuit applying positive torque and negative torque respectively in pulses.

3. The vehicle control device **(1200)** according to claim 1 or 2, wherein said engine stop control circuit comprises
a circuit calculating at least one of a signal width, signal interval, and signal count of said first signal such that the number of revolutions of said engine attains a target number of revolutions of the engine, and
a circuit providing said calculated first signal to said drive circuit.

4. The vehicle control device **(1200)** according to claim 1, wherein
said first stop control circuit comprises
a circuit calculating at least one of a signal width, signal interval, and signal count of said first signal such that the number of revolutions of said engine attains a target number of revolutions of the engine, and
a circuit providing said calculated first signal to said drive circuit,
said second stop control circuit comprises
a circuit calculating at least one of a signal width, signal interval and signal count of said first signal such that said crank angle attains at predetermined crank angle, and
a circuit providing said calculated first signal to said drive circuit.

5. The vehicle control device **(1200)** according to any of claims 1-4, wherein said control circuit further comprises a circuit providing a signal that sets a field current value of said motor generator **(3000)** to at least a predetermined current value when said engine **(100)** is to be stopped temporarily.

6. The vehicle control device **(1200)** according to any of claims 1-5, wherein said predetermined crank angle is an angle corresponding to a lowest engine starting torque in a first cylinder attaining complete explosion when the engine is restarted.

7. The vehicle control device **(1200)** according to any of claims 1-5, wherein said predetermined crank angle is an angle where a first cylinder attaining complete explosion is positioned before center dead point during a compression stroke when the engine is restarted.

8. The vehicle control device **(1200)** according to any claims 1-7, wherein said control circuit comprises an engine restart control circuit for cranking up said engine (100) by selectively switching between a first signal causing said motor generator **(3000)** to be operated as a motor and a second signal causing said motor generator (3000) to be operated as a generator for output to said drive circuit when said engine **(100)** is to be restarted.

9. The vehicle control device **(1200)** according to any of claims 1-8, wherein said control circuit further comprises a circuit providing a signal that sets a field current value of said motor generator **(3000)** to not more than a predetermined current value when said engine **(100)** is at a temporary stopped status.

10. The vehicle control device **(1200)** according to claim 5 or 9, wherein said signal that sets a field current of said motor generator **(3000)** is output to said drive circuit as a power generation control value of said drive circuit.

11. The vehicle control device **(1200)** according to any of claims 1-10, wherein an armature and rotor of said motor generator **(3000)** are components of an alternator, and said drive circuit is an air-cooled inverter circuit.

## Patentansprüche

1. Fahrzeugsteuervorrichtung (1200), in der ein System enthalten ist, das eine Maschine (100) temporär stoppt, wenn ein Zustand des Fahrzeugs eine vorbestimmte Bedingung erfüllt, wobei das Fahrzeug einen Motorgenerator (3000), der die Maschine (100) nach dem temporären Stopp wieder anlässt, und einen wieder aufladbaren Akkumulator (2000) enthält, der mit dem Motorgenerator (3000) verbunden ist, wobei die Steuervorrichtung (1200) aufweist:
eine Ansteuerschaltung, die mit dem Akkumulator (2000) verbunden ist,
eine Steuerschaltung, die mit der Ansteuerschaltung verbunden ist,
eine Sensoreinheit, die die Anzahl an Umdrehungen der Maschine (100) erfasst, und
eine Sensoreinheit, die einen Kurbelwinkel der Maschine (100) erfasst, wobei
die Steuerschaltung angepasst ist, um den Motorgenerator (3000) über die Ansteuerschaltung zu steuern,
die Ansteuerschaltung angepasst ist, um den Motorgenerator (3000) basierend auf einem von einer Steuerschaltung empfangenen Signal anzusteuern,
die Steuerschaltung eine Maschinenstoppsteuerschaltung aufweist, die die Maschine (100) bei einem vorbestimmten Kurbelwinkel durch selektives Umschalten stoppt, und der Ansteuerschaltung ein erstes Signal, das den Motorgenerator (300) veranlasst, als ein Motor betrieben zu werden, und ein zweites Signal bereitstellt, das den Motorgenerator (3000) veranlasst, während einer Periode von einem Initiieren einer Steuerung zum temporären Stoppen der Maschine (100) bis zum Stopp der Maschine (100) als ein Generator betrieben zu werden,
**dadurch gekennzeichnet, dass**
die Maschinenstoppsteuerschaltung Folgendes aufweist:
eine erste Stoppsteuerschaltung, die selektiv zwischen dem ersten Signal und dem zweiten Signal zur Ausgabe an die Ansteuerschaltung basierend auf der erfassten Anzahl an Umdrehungen umschaltet, und
eine zweite Stoppsteuerschaltung, die selektiv zwischen dem ersten Signal und dem zweiten Signal zur Ausgabe an die Ansteuerschaltung basierend auf dem erfassten Kurbelwinkel umschaltet,
wobei die erste Stoppsteuerschaltung eine Maschinenstoppsteuerung ausführt, wenn die Anzahl an Umdrehungen der Maschine eine erste vorbestimmte Anzahl an Umdrehungen der Maschine erreicht, und die zweite Stoppsteuerschaltung eine Maschinenstoppsteuerung ausführt, wenn die Anzahl an Umdrehungen der Maschine eine zweite vorbestimmte Anzahl an Umdrehungen der Maschine erreicht, wobei die erste vorbestimmte Anzahl an Umdrehungen der Maschine größer als die zweite vorbestimmte Anzahl an Umdrehungen der Maschine ist.

2. Fahrzeugsteuervorrichtung (1200) nach Anspruch 1, wobei die Maschinenstoppsteuerschaltung eine Schaltung aufweist, die jeweils ein positives Drehmoment und ein negatives Drehmoment in Impulsen zuführt.

3. Fahrzeugsteuervorrichtung (1200) nach Anspruch 1 oder 2, wobei die Maschinenstoppsteuerschaltung aufweist:
eine Schaltung, die zumindest eine Signalbreite, ein Signalintervall, und eine Signalzahl des ersten Signals derart berechnet, dass die Anzahl an Umdrehungen der Maschine eine Sollanzahl an Umdrehungen der Maschine erreicht, und
eine Schaltung, die der Ansteuerschaltung das berechnete erste Signal bereitstellt.

4. Fahrzeugsteuervorrichtung (1200) nach Anspruch 1, wobei
die erste Stoppsteuerschaltung aufweist:
eine Schaltung, die zumindest eines von einer Signalbreite, einem Signalintervall, und einer Signalzahl des ersten Signals derart berechnet, dass die Anzahl an Umdrehungen der Maschine eine Sollanzahl an Umdrehungen der Maschine erreicht, und
eine Schaltung, die der Ansteuerschaltung das berechnete erste Signal bereitstellt,
wobei die zweite Stoppsteuerschaltung aufweist:
eine Schaltung, die zumindest eines von einer Signalbreite, einem Signalintervall und einer Signalzahl des ersten Signals derart berechnet, dass der Kurbelwinkel einen vorbestimmten Kurbelwinkel erreicht, und
eine Schaltung, die der Ansteuerschaltung das berechnete erste Signal bereitstellt.

5. Fahrzeugsteuervorrichtung (1200) nach einem der Ansprüche 1-4, wobei die Steuerschaltung ferner eine Schaltung aufweist, die ein Signal bereitstellt, das einen Feldstromwert des Motorgenerators (3000) auf zumindest einen vorbestimmten Stromwert einstellt, wenn die Maschine (100) temporär zu stoppen ist.

6. Fahrzeugsteuervorrichtung (1200) nach einem der Ansprüche 1-5, wobei der vorbestimmte Kurbelwinkel ein Winkel ist, der einem niedrigsten Maschinenstartdrehmoment in einem ersten Zylinder entspricht, der eine vollständige Explosion erzielt, wenn die Maschine wieder angelassen wird.

7. Fahrzeugsteuervorrichtung (1200) nach einem der Ansprüche 1-5, wobei der vorbestimmte Kurbelwinkel ein Winkel ist, bei dem ein erster Zylinder, der eine vollständige Explosion erzielt, vor einem zentralen Totpunkt während eines Kompressionshubs positioniert ist, wenn die Maschine wieder angelassen wird.

8. Fahrzeugsteuervorrichtung (1200) nach einem der Ansprüche 1-7, wobei die Steuerschaltung eine Maschinenwiederanlasssteuerschaltung aufweist, um die Maschine (100) anzukurbeln, indem selektiv umgeschaltet wird zwischen einem ersten Signal, das den Motorgenerator (3000) veranlasst, als ein Motor betrieben zu werden, und einem zweiten Signal zur Ausgabe an die Ansteuerschaltung, wenn die Maschine (100) wieder anzulassen ist, das den Motorgenerator (3000) veranlasst, als ein Generator betrieben zu werden.

9. Fahrzeugsteuervorrichtung (1200) nach einem der Ansprüche 1-8, wobei die Steuerschaltung ferner eine Schaltung aufweist, die ein Signal bereitstellt, das einen Feldstromwert des Motorgenerators (3000) auf nicht mehr als einen vorbestimmten Stromwert einstellt, wenn sich die Maschine (100) in einem temporär gestoppten Zustand befindet.

10. Fahrzeugsteuervorrichtung (1200) nach Anspruch 5 oder 9, wobei das Signal, das einen Feldstrom des Motorgenerators (3000) einstellt, an die Ansteuerschaltung als ein Energieerzeugungssteuerwert der Ansteuerschaltung ausgegeben wird.

11. Fahrzeugsteuervorrichtung (1200) nach einem der Ansprüche 1-10, wobei ein Anker und ein Rotor des Motorgenerators (3000) Komponenten eines Wechselstromgenerators sind, und die Ansteuerschaltung eine luftgekühlte Inverterschaltung ist.

## Revendications

1. Dispositif (1200) de commande de véhicule incorporé avec un système qui arrête temporairement un moteur (100) lorsque l'état du véhicule satisfait une condition prédéterminée, ledit véhicule incorporant un moteur-générateur (3000) qui redémarre ledit moteur (100) après ledit arrêt temporaire, et un accumulateur rechargeable (2000) raccordé audit moteur-générateur (3000), ledit dispositif (1200) de commande comprenant :
un circuit d'attaque raccordée audit accumulateur (2000) ;
un circuit de commande raccordée audit circuit d'attaque ;
un capteur détectant le nombre de tours dudit moteur (100) ; et
un capteur détectant un angle de manivelle dudit moteur (100), dans lequel :
ledit circuit de commande est apte à commander ledit moteur-générateur (3000) via ledit circuit d'attaque ;
ledit circuit d'attaque est apte à attaquer ledit moteur-générateur (3000) en se basant sur un signal reçu d'un circuit de commande ;
ledit circuit de commande comprend un circuit de commande d'arrêt de moteur arrêtant ledit moteur (100) à un angle de manivelle prédéterminé en commutant sélectivement et en fournissant audit circuit d'attaque un premier signal faisant que ledit moteur-générateur (300) est mis en oeuvre comme un moteur et un second signal faisant que ledit moteur-générateur (3000) est mis en oeuvre comme un générateur durant une période commençant à partir du lancement de commande d'arrêt temporaire du moteur (100) jusqu'à l'arrêt du moteur (100),
**caractérisé en ce que** ledit circuit de commande d'arrêt de moteur comprend :
un premier circuit de commande d'arrêt commutant sélectivement entre ledit premier signal et ledit second signal pour sortie vers ledit circuit d'attaque en se basant sur ledit nombre de tours détecté ; et
un second circuit de commande d'arrêt commutant sélectivement entre ledit premier signal et ledit second signal pour sortie vers ledit circuit d'attaque en se basant sur angle de manivelle détecté,
dans lequel ledit premier circuit de commande d'arrêt exécute la commande d'arrêt de moteur lorsque le nombre de tours dudit moteur atteint un premier nombre prédéterminé de tours du moteur, et ledit second circuit de commande d'arrêt exécute la commande d'arrêt de moteur lorsque le nombre de tours dudit moteur atteint un second nombre prédéterminé de tours du moteur, ledit premier nombre prédéterminé de tours dudit moteur étant plus élevé que ledit second nombre prédéterminé de tours du moteur.

2. Dispositif (1200) de commande de véhicule selon la revendication 1, dans lequel ledit circuit de commande d'arrêt de moteur comprend un circuit appliquant, par impulsions, respectivement un couple positif et un couple négatif.

3. Dispositif (1200) de commande de véhicule selon la revendication 1 ou 2, dans lequel ledit circuit de commande d'arrêt de moteur comprend :
un circuit calculant au moins l'un d'une largeur de signal, d'un intervalle de signal et d'un compte de signal dudit premier signal de façon que le nombre de tours dudit moteur atteigne un nombre cible de tours du moteur ; et
un circuit fournissant, audit circuit d'attaque, ledit premier signal calculé.

4. Dispositif (1200) de commande de véhicule selon la revendication 1, dans lequel :
ledit premier circuit de commande d'arrêt comprend :
un circuit calculant au moins l'un d'une largeur de signal, d'un intervalle de signal et d'un compte de signal dudit premier signal de façon que le nombre de tours dudit moteur atteigne un nombre cible de tours du moteur ; et
un circuit fournissant, audit circuit d'attaque, ledit premier signal calculé ;
ledit second circuit de commande d'arrêt comprend :
un circuit calculant au moins l'un d'une largeur de signal, d'un intervalle de signal et d'un compte de signal dudit premier signal de façon que l'angle de manivelle atteigne un angle de manivelle prédéterminé ; et
un circuit fournissant, audit circuit d'attaque, ledit premier signal calculé.

5. Dispositif (1200) de commande de véhicule selon l'une quelconque des revendications 1 à 4, dans lequel ledit circuit de commande comprend en outre un circuit fournissant un signal qui fixe une valeur de courants d'excitation dudit moteur-générateur (3000) à au moins une valeur de courant prédéterminée lorsque ledit moteur (100) doit être arrêté temporairement.

6. Dispositif (1200) de commande de véhicule selon l'une quelconque des revendications 1 à 5, dans lequel ledit angle de manivelle prédéterminé est un angle correspondant à un couple le plus bas de démarrage de moteur dans un premier cylindre atteignant l'explosion complète lorsque l'on redémarre le moteur.

7. Dispositif (1200) de commande de véhicule selon l'une quelconque des revendications 1 à 5, dans lequel ledit angle de manivelle prédéterminé est un angle où un premier cylindre atteignant l'explosion complète est placé avant le point mort central durant une course de compression lorsque l'on redémarre le moteur.

8. Dispositif (1200) de commande de véhicule selon l'une quelconque des revendications 1 à 7, dans lequel ledit circuit de commande comprend un circuit de commande de redémarrage de moteur pour lancer ledit moteur (100) en commutant sélectivement entre un premier signal faisant que ledit moteur-générateur (3000) est mis en oeuvre comme moteur et un second signal faisant que ledit moteur-générateur (3000) est mis en oeuvre comme générateur pour sortie vers ledit circuit d'attaque lorsque l'on doit redémarrer ledit moteur (100).

9. Dispositif (1200) de commande de véhicule selon l'une quelconque des revendications 1 à 8, dans lequel ledit circuit de commande comprend en outre un circuit fournissant un signal qui fixe une valeur de courant d'excitation dudit moteur-générateur (3000) à pas moins qu'une valeur prédéterminée de courant lorsque ledit moteur (100) est dans un état d'arrêt temporaire.

10. Dispositif (1200) de commande de véhicule selon la revendication 5 ou 9, dans lequel ledit signal qui fixe un courant d'excitation dudit moteur-générateur (3000) est sorti vers ledit circuit d'attaque en tant que valeur de commande de génération d'énergie dudit circuit d'attaque.

11. Dispositif (1200) de commande de véhicule selon l'une quelconque des revendications 1 à 10, dans lequel une armature et un rotor dudit moteur-générateur (3000) sont des composants d'un alternateur, et dans lequel ledit circuit d'attaque est un circuit redresseur refroidi à l'air.
